(19) Europäisches Patentamt
European Patent Office
Office européen des brevets

(11) **EP 1 850 502 A1**

(12) **EUROPEAN PATENT APPLICATION**
published in accordance with Art. 158(3) EPC

(43) Date of publication:
**31.10.2007 Bulletin 2007/44**

(51) Int Cl.:
**H04B 7/005** *(2006.01)*    **H04L 27/38** *(2006.01)*

(21) Application number: **05710566.0**

(22) Date of filing: **23.02.2005**

(86) International application number:
**PCT/JP2005/002873**

(87) International publication number:
**WO 2006/090438 (31.08.2006 Gazette 2006/35)**

(84) Designated Contracting States:
**DE FR GB**

(71) Applicant: **MITSUBISHI ELECTRIC CORPORATION**
**Chiyoda-ku**
**Tokyo 100-8310 (JP)**

(72) Inventor: **NAGAYASU, Takayuki,**
**Mitsubishi Electric Corp.**
**Chiyoda-ku,**
**Tokyo 08310 (JP)**

(74) Representative: **Pfenning, Meinig & Partner GbR**
**Patent- und Rechtsanwälte**
**Theresienhöhe 13**
**80339 München (DE)**

(54) **RECEIVING APPARATUS**

(57)    A receiving device according to the present invention includes, for example, a channel impulse response estimating part (21) that estimates a channel impulse response based on received signals, an equalization part (22) that performs predetermined decision processing based on received signals and a channel impulse response estimating value, a distortion removing part (23) that performs distortion compensation processing and processing of re-estimating a channel impulse response based on received signals, a decision value, an estimated channel impulse response, a parameter estimating part (24) that re-estimates a channel impulse response once again based on a decision value, received signals after being distortion-compensated, and a value of re-estimating a channel impulse response, and an equalization part (25) that performs predetermined decision processing again based on received signals after being distortion-compensated and a value of re-estimating a channel impulse response again.

FIG.2

**Description**

TECHNICAL FIELD

The present invention relates to a communication device (referred to as a receiving device) on a receiving side of a radio communication system. The present invention particularly relates to a receiving device that removes distortion that is a factor that causes degradation in the communication quality.

BACKGROUND ART

In the communication environment of the cellular phones, received signals can sometime get distorted due to frequency selective fading with intersymbol interference. It is known to those in the art to use intersymbol interference components in an equalizer to demodulate signals to avoid such distortion. On the other hand, for example, DC offset, frequency offset, phase deviation on axes intersecting at right angles, and amplitude imbalance on axes intersecting at right angles that occur in an analog receiving signal amplifier, filter, down-converter, and analog processor such as an analog-digital converter, and also interference of another channel with the same frequency, interference of another channel with an adjacent frequency and the like are the factors that cause degradation of communication quality other than the distortion due to frequency selective fading. To realize high quality communication, it is necessary to remove and compensate these degradation factors.

In a method described in the following Patent Document 1, for example, received signals having known training signals are used to remove a DC offset and then the received signals are demodulated in an equalizer.

Patent Document 1: United States Patent Application No. 6370205

DISCLOSURE OF INVENTION

PROBLEM TO BE SOLVED BY THE INVENTION

In the method described in the following Patent Document 1, received signals having known training signals are used to remove a DC offset and then the received signals are demodulated through an equalizer. However, a problem arises in that the DC offset component can not be accurately estimated and removed because only received signals having training signals are used.

The present invention is made in view of the above. It is an object of the present invention to provide a receiving device that can more accurately estimate and remove a distortion component, such as a DC offset, than in the conventional technology thereby realizing higher-quality communication.

MEANS FOR SOLVING PROBLEM

To address the above problem and achieve the object, a receiving device according to the present invention is a receiving device (a communication device on a receiving side) that is used in a radio communication system and includes, for example, a channel impulse response estimating unit (that corresponds to a channel impulse response estimating part 21 in a later-described embodiment) that estimates a channel impulse response based on received signals; a first equalization unit (that corresponds to an equalization unit 22) that performs predetermined decision processing based on the received signals and a channel impulse response estimating value that is output by the channel impulse response estimating unit; a distortion removing unit (that corresponds to a distortion removing part 23) that performs distortion compensation processing and processing for re-estimation of the channel impulse response based on the received signals, a decision value that is output by the first equalization unit, and the channel impulse response estimating value that is output by the channel impulse response estimating unit, a parameter estimating unit (that corresponds to a parameter estimating part 24) that re-re-estimates the channel impulse response based on the decision value that is output by the first equalization unit, received signals after distortion compensation that are output by the distortion removing unit, and a re-estimated value of the channel impulse response; and a second equalization unit (that corresponds to an equalization part 25) that performs the predetermined decision processing again based on the received signals after distortion compensation that are output by the distortion removing unit and a re-re-estimated value of the channel impulse response that is output by the parameter estimating unit.

EFFECT OF THE INVENTION

The receiving device according to the present invention performs the provisional decision to received signals, accurately estimates the distortion component in received signals based on the decision value and received signals in data, and accurately removes the estimated distortion component. It is advantageous that high-quality communication can be performed, compared with a conventional receiving device.

BRIEF DESCRIPTION OF DRAWINGS

[Fig. 1] Fig. 1 is a configuration example of a receiving device according to the present invention.
[Fig. 2] Fig. 2 is a configuration example of a demodulation processor.
[Fig. 3] Fig. 3 is a configuration example of a distortion removing part according to a first embodiment.
[Fig. 4] Fig. 4 is another configuration example of a demodulation processor.
[Fig. 5] Fig. 5 is a configuration example of a distortion removing part according to a second embodiment.
[Fig. 6] Fig. 6 is a configuration example of a distortion removing part according to a third embodiment.
[Fog. 7] Fig. 7 is a configuration example of a distortion removing part according to a fourth embodiment.
[Fig. 8] Fig. 8 is a configuration example of a distortion removing part according to a fifth embodiment.
[Fig. 9] Fig. 9 is a configuration example of a distortion removing part according to a sixth embodiment.
[Fig. 10] Fig. 10 is still another configuration example of a demodulation processor.

EXPLANATIONS OF LETTERS OR NUMERALS

| 1 | antenna |
| 2 | analog processor |
| 3 | analog/digital converting part (A/D) |
| 4 | demodulation processor |
| 5 | error correction part |
| 21 | channel impulse response estimating part |
| 22 | equalization part |
| 23 | distortion removing part |
| 24, 101 | parameter estimating parts |
| 25 | equalization part |
| 31 | channel impulse response re-estimating part |
| 32 | DC offset removing part |
| 41 | IQ gain correcting part |
| 51 | IQ cross-distortion correcting part |
| 61 | frequency offset correcting part |
| 71 | out-of-band interference suppressing part |
| 81 | co-channel interference removing part |
| 102 | normalization part |

BEST MODE(S) FOR CARRYING OUT THE INVENTION

Exemplary embodiments of a receiving device according to the present invention are explained below in detail with reference to accompanying drawings. The present invention is not limited to the embodiments explained below.

First Embodiment.

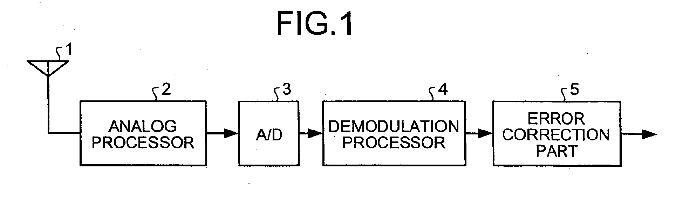

Fig. 1 is a configuration example of a receiving device according to the present invention. The receiving device includes an antenna 1, an analog processor 2, an analog/digital converting part (A/D) 3, a demodulation processor 4, and an error correction part 5. It is assumed in the following embodiments that processing such as encoding is performed on the transmitting side and a known training sequence is included in part of transmitted signals on a receiving side. An explanation is given about a case of using 8-PSK as an example of the modulation scheme. In 8-PSK, a 3-bit signal can be transmitted as a symbol.

As shown in Fig. 1, a received wave received through the antenna 1 is transmitted to the analog processor 2. In the analog processor 2, processing such as band limitation or down-converting is performed thereby converting the received wave into analog signals in a baseband or intermediate frequency. Then, the A/D 3 converts the analog signals to received digital signals (hereinafter, referred to as a received signal). Subsequently, the demodulation processor 4 calculates a soft-decision value or a hard-decision value as a demodulation result of the received signals. If the received signals are in intermediate frequency, the demodulation processor 4 converts the received signals into baseband signals. The error correction part 5 performs error correction processing such as deinterleaving or decoding.

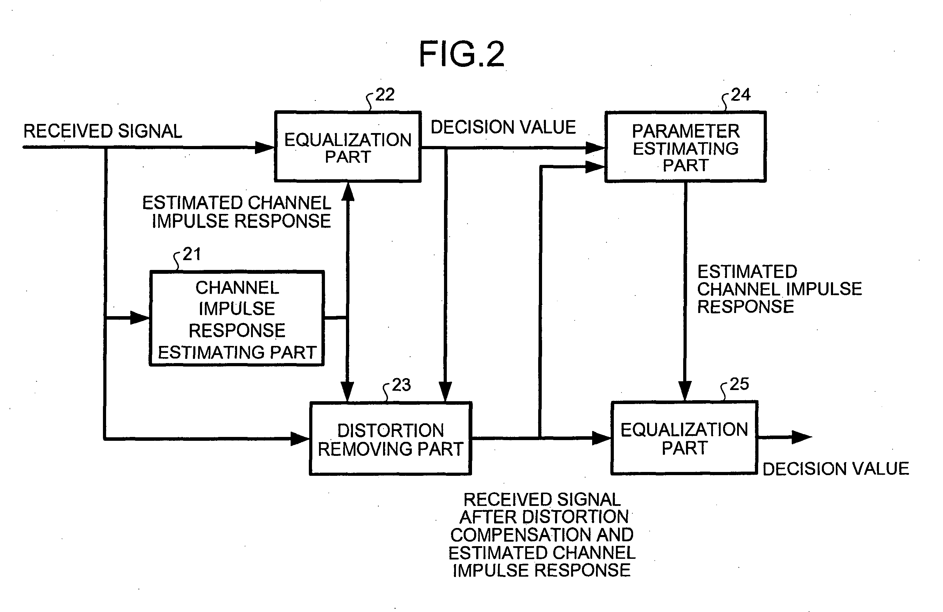

Operations of the demodulation processor 4 in the receiving device are explained with reference to the drawings. Fig. 2 is a configuration example of the demodulation processor 4. The demodulation processor 4 includes a channel impulse response estimating part 21, an equalization part 22, a distortion removing part 23, a parameter estimating part 24, and an equalization part 25.

In Fig. 2, the channel impulse response estimating part 21 takes the received signals as an input, uses a training sequence, and estimates a channel impulse response of the received signals through known technology.

The equalization part 22 takes into consideration distortion due to multipath such as frequency selective fading and estimates a decision value based on processing, for example, described in International Publication No. WO02/009315 "RECEIVING DEVICE FOR RADIO COMMUNICATION AND RECEIVING METHOD". As processing of the equalization part 22, a soft-decision value output equalizer that uses algorithm such as SOVA (Soft-Output Viterbi Algorithm), MAP (Maximum a Posteriori), Max-log-MAP, Log-MAP and an equalizer that is transformed by each of the equalizers can be used. An equalizer that outputs a hard-decision value such as Maximum-Likelihood Sequence Estimation (MLSE), Decision-Feedback Sequence Estimation (DFSE), Delayed Decision-Feedback Sequence Estimation (DDFSE), Decision-Feedback Equalizer (DFE), Reduced-State Sequence Estimation (RSSE), List-output Viterbi Equalizer (LVE), or an equalizer that uses M algorithm can be also used.

The distortion removing part 23 removes a distortion component of the received signals based on a decision value that is output by the equalization part 22 and an estimated channel impulse response that is output by the channel impulse response estimating part 21. The parameter estimating part 24 re-estimates an estimated channel impulse response based on a decision value that is output by the equalization part 22, the received signals after removal of distortion that are output by the distortion removing part 23, and an estimated channel impulse response.

The equalization part 25 performs demodulation processing similar to the equalization part 22 based on the received signals after removal of distortion that are output by the distortion removing part 23, and an estimated channel impulse response that is output by the parameter estimating part 24. The equalization part 25 and the equalization part 22 need not necessarily use the same equalization method, i.e., they can use different equalization processing described above.

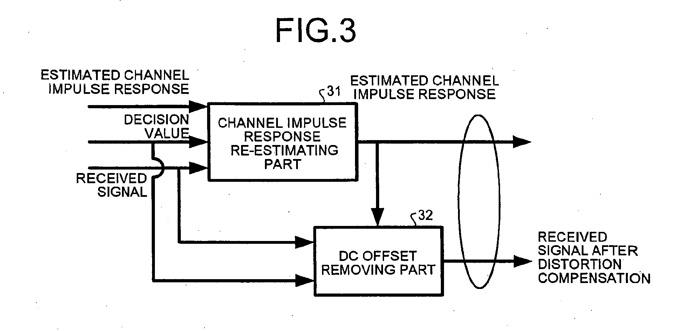

Operations of the distortion removing part 23 in the demodulation processor 4 are explained in detail with reference to the drawings. Fig. 3 is a configuration example of the distortion removing part 23 according to a first embodiment and, for example, depicts an exemplary configuration when a DC offset component is to be removed.

In Fig. 3, a channel impulse response re-estimating part 31 re-estimates a channel impulse response based on a decision value that is output by the equalization part 22, an estimated channel impulse response that is output by the channel impulse response estimating part 21, and the received signals, as follows.

First of all, as shown in the following Equation (1), an error signal e(n) is calculated for n=L+1 to n=N:

$$e(n) = r(n) - \Sigma h(i) \cdot I(n-i) \tag{1}$$

where L stands for a memory length of a channel impulse response (number of taps-1) and N stands for a symbol length of the received signals, $\Sigma$ stands for a total sum for i=0 to L, r(n) (n=1 to N) stands for the received signal, h(i)(i=0 to L) stands for an estimated channel impulse response, and I(n) stands for a hard-decision value that is output by the equalization part 22. However, if the equalization part 22 outputs a soft-decision value, the soft-decision value is replaced by a hard-decision value. The hard-decision value is a value obtained by mapping signal points to complex numbers.

Subsequently, the re-estimation value h'(i) of the channel impulse response is calculated by using the following Equation (2):

$$h'(i) = h(i) + 1 / (N-L) \cdot \Sigma e(n) \cdot CONJG(I(n-i)) \tag{2}$$

where $\Sigma$ is calculated for n=L+1 to N, and CONJG(X) is a complex conjugate of X.

In Fig. 3, a DC offset removing part 32 removes a DC offset, as shown below, based on the decision value that is output by the equalization part 22, the estimated channel impulse response that is obtained with Equation (2), and the received signals.

As shown in the following Equation (3), an error signal e'(n) is first calculated for n=L+1 to n=N.

$$e'(n) = r(n) - \Sigma h'(i) \cdot I(n-i) \qquad\qquad (3)$$

Next, an average value of the error e'(n) is calculated as shown in the following Equation (4) and the resulting value is taken as an estimation value p of a DC offset.

$$p = 1 / (N-L) \cdot \Sigma e'(n) \qquad\qquad (4)$$

The estimation value p of a DC offset is cancelled from the received signals r(n). More specifically, processing in the following Equation (5) is performed for n=1 to n=N.

$$r'(n) = r(n) - p \qquad\qquad (5)$$

Operations of the parameter estimating part 24 in the demodulation processor 4 are explained in detail. The parameter estimating part 24 re-calculates an estimated channel impulse response h"(i) based on a decision value that is output by the equalization part 22, the received signals r'(n) after removal of distortion that are output by the distortion removing part 23, and an estimated channel impulse response h'(i) as represented in the following Equations (6) and (7):

$$e''(i) = r'(n) - \Sigma h'(i) \cdot I(n-1) \qquad\qquad (6)$$

$$h''(i) = h'(i) + 1 / (N-L) \cdot \Sigma e''(n) \cdot CONJG(I(n-i)) \qquad\qquad (7)$$

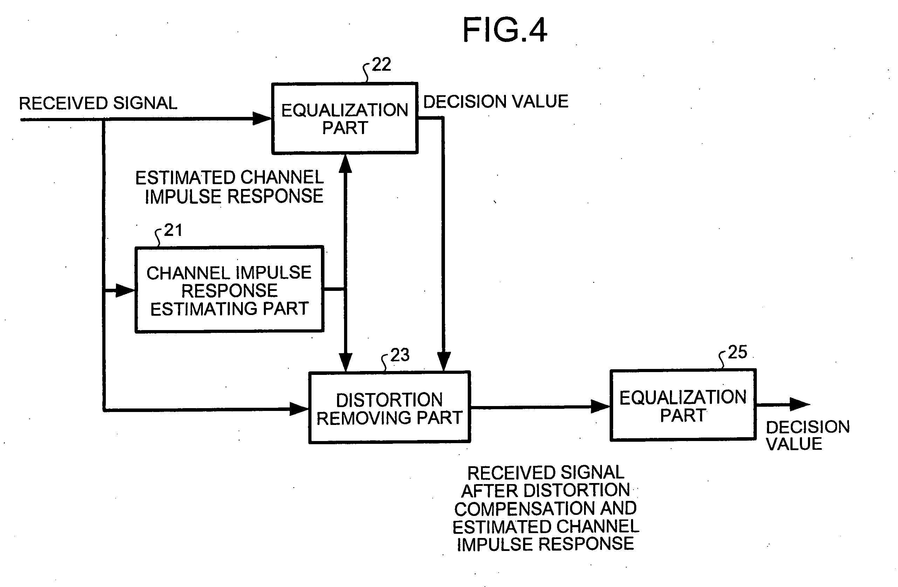

In Equation (6), $\Sigma$ is calculated for i=0 to L, and in Equation (7), $\Sigma$ is calculated for n=L+1 to N.
Thus, in the embodiment, a provisional decision of the received signals is first performed, a distortion component, such as a DC offset, is then accurately estimated based on the decision value and the data part of the received signals, and finally the estimated distortion component is accurately removed. This makes it possible to realize higher-quality communication than that in the conventional technology.
The channel impulse response re-estimating part 31 can be configured to estimate the channel impulse response by using some other method, i.e. a method other than of using the estimated channel impulse response that is output by the channel impulse response estimating part 21. The channel impulse response re-estimating part 31 can be configured to estimate the channel impulse response by using, for example, the decision value that is output by the equalization part 22 and the received signals by using the normal equation, LMS (Least Mean Square) algorithm, RLS (Recursive Least Square), or the like.
The distortion removing part 23 can be configured to calculate the DC offset based only on Equations (1) and (4) instead of all of Equations (1) to (4). In this case, e'(n) in Equation (4) is replaced by e(n).
The demodulation processor shown in Fig. 4 can be used instead of the demodulation processor 14. Fig. 4 is another configuration example of the demodulation processor in which the parameter estimating part 24 in Fig. 2 is omitted. In the demodulation processor shown in Fig. 4, the equalization part 25 performs equalization processing based on the received signals after distortion compensation and the estimated channel impulse response that are output by the distortion removing part 23.

Second Embodiment.

An explanation is given below about operations in a second embodiment. A receiving device according to the second embodiment has almost the same configuration as that in the first embodiment (see Figs. 1, 2, and 4). In the embodiment, an explanation of the same processing as in the first embodiment is omitted and operations of only the distortion removing part 23 that is different in configuration from that in the first embodiment are explained.

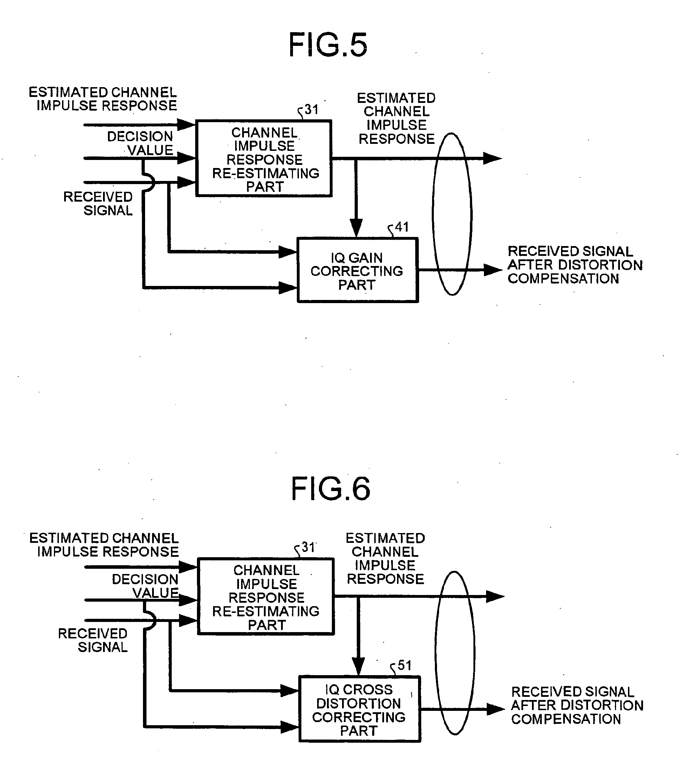

Fig. 5 is a configuration example of the distortion removing part 23 according to the second embodiment and, for example, an exemplary configuration when IQ gain imbalance is corrected in the distortion removing part 23 is-shown.

The contents that differ from those explained with respect to Fig. 3 are only explained below.

As shown in Fig. 5, an IQ gain correcting part 41 corrects IQ gain imbalance, as described below, based on a decision value that is output by the equalization part 22, an estimated channel impulse response that is output by the channel impulse response re-estimating part 31, and the received signals.

The IQ gain correcting part 41 first calculates corrected received signals with the following Equation (8) for candidate units of a value to correct IQ gain:

$$R(k,n)=Re[r(n)]\cdot gi(k)+j\cdot Im[r(n)]\cdot gq(k) \qquad (8)$$

Calculation is performed for n=1 to N in (8). In Equation (8), Re[X] represents a real part of a complex number X, Im[X] represents an imaginary part of the complex number X, and the second power of j is -1.

Moreover, in Equation (8), gi(k) and gq(k) are k-th gain correcting values and examples thereof are:

$$gi(0)=1.00, \quad gq(0)=1.00$$

$$gi(1)=1.02, \quad gq(1)=0.98$$

$$gi(2)=1.04, \quad gq(2)=0.96$$

$$gi(3)=0.98, \quad gq(3)=1.02$$

$$gi(4)=0.96, \quad gq(4)=1.04$$

In these examples, calculation is performed for k=0 to 4 in Equation (8).

A replica of the received signal is calculated with the following Equation (9):

$$s(n)=\Sigma h(i)\cdot I(n-i) \qquad (9)$$

In Equation (9), $\Sigma$ represents a total sum for i=0 to L, and s(n) is calculated for n=L+1 to N.

Finally, a difference E(k) between the corrected received signal and the replica of the received signal is calculated with the following Equation (10) and corrected received signals R(k,n) for the difference to be the smallest are output as received signals after distortion compensation:

$$E(k)=(R(k,n)-s(n))^2 \qquad (10)$$

Thus, in the embodiment, a provisional decision of the received signals is first performed, and IQ gain imbalance is then corrected in the distortion removing part based on the decision value and the received signals that correspond to data. This makes it possible to realize higher-quality communication than that in the conventional technology.

Third Embodiment.

An explanation is given below about operations in a third embodiment. A receiving device according to the third embodiment has almost the same configuration as that in the first embodiment (see Figs. 1, 2, and 4). In the embodiment, an explanation of the same processing as in the first and second embodiments is omitted and operations of only the distortion removing part 23 that is different in configuration from that in the first and second embodiments are explained.

Fig. 6 is a configuration example of the distortion removing part 23 according to the third embodiment and, for example, an exemplary configuration when IQ cross-distortion is corrected in the distortion removing part 23 is shown. The contents that differ from those explained with respect to Fig. 3 or 5 are only explained below.

As shown in Fig. 6, an IQ cross-distortion correcting part 51 corrects IQ cross-distortion, as explained below, based on a decision value that is output by the equalization part 22, an estimated channel impulse response that is output by the channel impulse response re-estimating part 31, and the received signals.

Corrected received signals are calculated with the following Equation (11) as candidate units for a value to correct IQ cross-distortion:

$$R(k,n)=Re[r(n)]\cdot exp(j\cdot ph(k))+j\cdot Im[r(n)]\cdot exp(-j\cdot ph(k)) \tag{11}$$

Calculation is performed for n=1 to N in Equation (11).

Moreover, in Equation (11), ph(k) is a k-th cross-distortion corrected value and examples thereof are:

$$Ph(0)=0.03$$

$$Ph(1)=0.00$$

$$Ph(2)=-0.03$$

In these examples, calculation is performed for k=0 to 2 in Equation (11).

A replica of the received signal is calculated with the following Equation (12):

$$s(n)=\Sigma h(i)\cdot I(n-i) \tag{12}$$

In Equation (12), Σ represents a total sum for i=0 to L, and s(n) is calculated for n=L+1 to N.

Finally, a difference E(k) between the corrected received signal and the replica of the received signal is calculated with the following Equation (13), and corrected received signals R(k,n) for the difference to be the smallest are output as received signals after distortion compensation:

$$E(k)=(R(k,n)-s(n))^2 \tag{13}$$

Thus, in the embodiment, a provisional decision of the received signals is first performed and IQ cross-distortion is then corrected in the distortion removing part based on the decision value and the received signals that correspond to data. This makes it possible to realize higher-quality communication than that in the conventional technology.

Fourth Embodiment.

An explanation is given below about operations in a fourth embodiment. A receiving device according to the fourth embodiment has almost the same configuration as that in the first embodiment (see Figs. 1, 2, and 4). In the embodiment, an explanation of the same processing as in the first, second, and third embodiments is omitted and operations of only the distortion removing part 23 that is different in configuration from in the first, second, and third embodiments are explained.

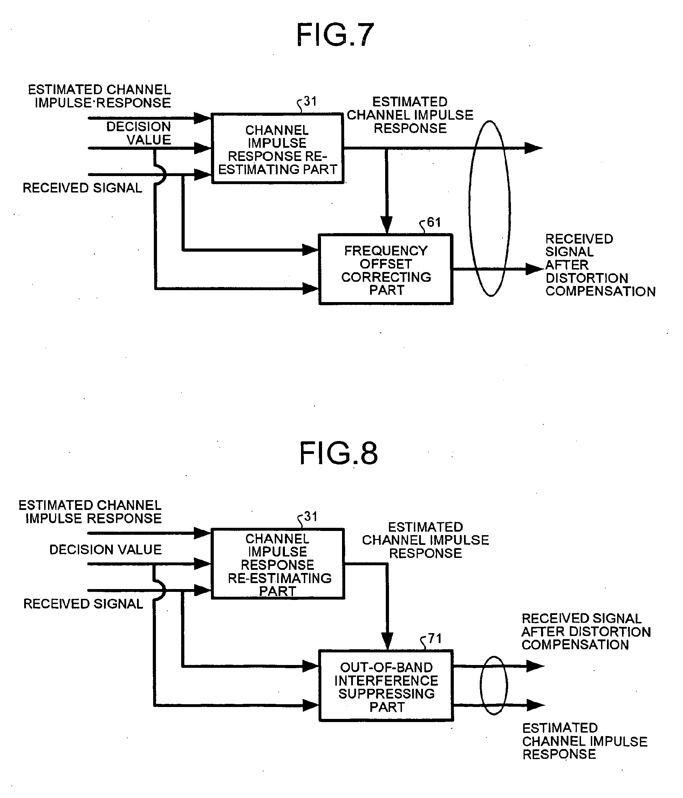

Fig. 7 is a configuration example of the distortion removing part 23 according to the fourth embodiment and, for example, an exemplary configuration when a frequency offset is corrected in the distortion removing part 23 is shown. The contents that differ from those explained with respect to Fig. 3, 5, or 6 are only explained below.

As shown in Fig. 7, a frequency offset correcting part 61 corrects a frequency offset, as explained below, based on a decision value that is output by the equalization part 22, an estimated channel impulse response that is output by the channel impulse response re-estimating part 31, and the received signals.

Corrected received signals are calculated with the following Equation (14) as candidate f(k) units for a value to correct a frequency offset:

$$R(k,n)=r(n)\cdot exp(-j\cdot f(k)\cdot(n-N/2)) \qquad (14)$$

Calculation is performed for n=1 to N in Equation (14).

Moreover, in Equation (14), f(k) is a k-th frequency offset corrected value and examples thereof are:

$$f(0)=0.00015$$

$$f(1)=0.00000$$

$$f(2)=-0.00015$$

In these examples, calculation is performed for k=0 to 2 in Equation (14).

A replica of the received signal is calculated with the following Equation (15):

$$s(n)=\Sigma h(i)\cdot I(n-i) \qquad (15)$$

In Equation (12), $\Sigma$ represents a total sum for i=0 to L, and s(n) is calculated for n=L+1 to N.

Finally, a difference E(k) between the corrected received signal and the replica of the received signal is calculated with the following Equation (16), and corrected received signals R(k,n) for the difference to be the smallest are output as received signals after distortion compensation:

$$E(k)=\Sigma(R(k,n)-s(n))^2 \qquad (16)$$

In Equation (16), $\Sigma$ represents a total sum for n=L+1 to N.

Thus, in the embodiment, a provisional decision of the received signals is first performed, and a frequency offset is then corrected in the distortion removing part based on the decision value and the received signals that correspond to data. This makes it possible to realize higher-quality communication than that in the conventional technology.

Fifth Embodiment.

An explanation is given below about operations in a fifth embodiment. A receiving device according to the fifth embodiment has almost the same configuration as that in the first embodiment (see Figs. 1, 2, and 4). In the embodiment, an explanation of the same processing as in the first to fourth embodiments is omitted and operations of only the distortion removing part 23 that is different in configuration from in the first to fourth embodiments are explained.

Fig. 8 is a configuration example of the distortion removing part 23 according to the fifth embodiment and, for example, an exemplary configuration when out-of-band interference is suppressed in the distortion removing part 23 is shown. The contents that differ from those explained with respect to Fig. 3, or 5 to 7 are only explained below.

As shown in Fig. 8, an out-of-band interference suppressing part 71 suppresses out-of-band interference, as explained below, based on a decision value that is output by the equalization part 22, an estimated channel impulse response that is output by the channel impulse response re-estimating part 31, and the received signals.

An out-of-band interference of the received signals is suppressed with the following Equation (17) by using a filter that has slightly narrowband frequency characteristics, compared with a signal bandwidth of received signals. To remove the out-of-band interference, received signals are sampled with a sampling rate of four times a symbol rate to obtain received signals r4(m). A relation between r(n) and r4(m) is r(n)=r4(4xm).

$$r'(n)=\Sigma r4(4\times n-i+Nx/2)\cdot hx(i) \qquad (17)$$

In Equation (17), $\Sigma$ represents a total sum for i=0 to Nx-1. Calculation is performed for n=1 to N in Equation (17). Signals before and after the received signal are used as received signals r4(m) in which m<1, m>4xN. Moreover, hx(i) (i=0 to Nx-1) represents a tap coefficient of a filter and Nx represents the number of taps of a filter.

An error signal e'(n) is calculated as n=L+1 to N based on an estimated channel impulse response h'(i) that is output by the channel impulse response re-estimating part 31, a decision value that is output by the equalization part 22, and the received signals r'(n) after suppression of out-of-band interference:

$$e'(n)=r'(n)-\Sigma h'(i)\cdot I(n-i) \qquad (18)$$

In Equation (18), $\Sigma$ represents a total sum for i=0 to L. Moreover, h'(i) (i=0 to L) represents an estimated channel impulse response and I(n) (n=1 to N) represents a hard-decision value that is output by the equalization part 22. However, if the equalization part 22 outputs a soft-decision value, the soft-decision value is changed to a hard-decision value. The hard-decision value is a value obtained by mapping signal points to complex numbers.

A value h"(i) of re-estimating a channel impulse response is calculated based on processing in the following Equation (19):

$$h''(i)=h'(i)+1/(N-L)\cdot\Sigma e'(n)\cdot CONJG(I(n-i)) \qquad (19)$$

In Equation (19), $\Sigma$ represents a total sum for n=L+1 to N.

Error electric power Ex after out-of-band interference is suppressed is calculated based on processing of the following Equation (20) based on the above-obtained value h"(i) of the re-estimating a channel impulse response, the decision value that is output by the equalization part 22, and the received signals r'(n) after suppression of out-of-band interference:

$$Ex=\Sigma(r'(n)-\Sigma h''(i)\cdot I(n-i))^2 \qquad (20)$$

In Equation (20), $\Sigma$ inside ($\cdot$) represents a total sum for i=0 to N, and $\Sigma$ outside ($\cdot$) represents a total sum for n=L+1 to N.

On the other hand, error electric power Ey before out-of-band interference is suppressed is calculated based on processing of the following Equation (21) based on the estimated channel impulse response h'(i) that is output by the channel impulse response re-estimating part 31, a decision value that is output by the equalization part 22, and the received signals r(n):

$$Ey=\Sigma(r(n)-\Sigma h'(i)\cdot I(n-i))^2 \qquad (21)$$

In Equation (21), $\Sigma$ inside ($\cdot$) represents a total sum for i=0 to L, and $\Sigma$ outside ($\cdot$) represents a total sum for n=L+1 to N.

When Ey is larger than Ex, the received signals r'(n) suppression of out-of-band interference and the re-estimation value h"(i) of a channel impulse response are finally output as the received signals after distortion compensation and the estimated channel impulse response, respectively. On the contrary, when Ex is larger than Ey, the received signals r(n) and the estimated channel impulse response h'(i) are output.

Thus, in the embodiment, a provisional decision of received signals is first performed, and out-of-band interference is then suppressed in the distortion removing part based on the decision value and the received signals that correspond to data. This makes it possible to realize higher-quality communication than that in the conventional technology.

Sixth Embodiment.

An explanation is given below about operations in a sixth embodiment. A receiving device according to the sixth embodiment has almost the same configuration as that in the first embodiment (see Figs. 1, 2, and 4). In the embodiment, an explanation of the same processing as in the first to fifth embodiments is omitted and operations of only the distortion removing part 23 that is different in configuration from in the first to fifth embodiments are explained.

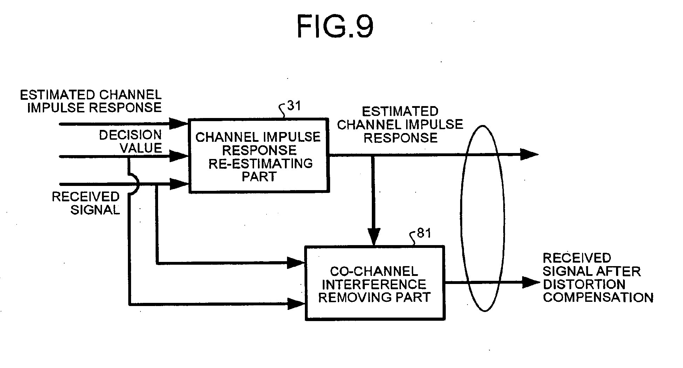

Fig. 9 is a configuration example of the distortion removing part 23 according to the sixth embodiment and, for example, an exemplary configuration when co-channel interference is removed in the distortion removing part 23 is shown. The contents that differ from those explained with respect to Fig. 3, or 5 to 8 are only explained below.

As shown in Fig. 9, a co-channel interference removing part 81 removes co-channel interference, as explained below, based on a decision value that is output by the equalization part 22, an estimated channel impulse response that is output by the channel impulse response re-estimating part 31, and the received signals.

A hope signal is removed from the received signals r(n) based on an estimated channel impulse response h'(i) that is output by the channel impulse response re-estimating part 31 and a decision value that is output by the equalization part 22. More specifically, e(n) that includes a co-channel interference component is calculated with the following Equation (22) as n=L+1 to N:

$$e(n) = r(n) - \Sigma h'(i) \cdot I(n-i) \tag{22}$$

In Equation (22), $\Sigma$ represents a total sum for i=0, to L. Moreover, h'(i) (i=0 to L) represents an estimated channel impulse response and I(n) (n=1 to N) represents a hard-decision value that is output by the equalization part 22. However, if the equalization part 22 outputs a soft-decision value, the soft-decision value is changed to a hard-decision value. The hard-decision value is a value obtained by mapping signal points to complex numbers.

An estimation value hc(i) and a decision value Ic(n) of a channel impulse response in co-channel interference are calculated with respect to received signals e(n) after a hope signal is removed based on a technology described in, for example, "An Adaptive Maximum-Likelihood Sequence Estimator for Fast Time-Varying Intersymbol Interference channels" written by H. Kudo, K. Murakami, and T. Fujino, (IEEE Trans. commun., vol. 42, no. 2/3/4, pp. 1872-1880, 1994). A co-channel interference component is removed from the received signals r(n) with the following Equation (23) based on the estimation value hc(i) and the decision value Ic(n) of the channel impulse response. The co-channel interference component removing part 81 outputs the following r'(n) as received signals after distortion compensation:

$$r'(n) = r(n) - \Sigma hc(i) \cdot Ic(n-i) \tag{23}$$

In Equation (23), $\Sigma$ represents a total sum for i=0 to L, and in calculating the received signals r'(n) after a co-channel interference component is removed the calculation is performed for n=1 to N. Moreover, Ic(n) in which n<1 is treated as 0.

Thus, in the embodiment, a provisional decision of received signals is first performed, and co-channel interference is then removed in the distortion removing part based on the decision value and the received signals that correspond to data. This makes it possible to realize higher-quality communication than that in the conventional technology.

The distortion removing part 23 can use, in the first to sixth embodiments, not only the decision value that is output by the equalization part 22 but also a sequence in which a training sequence and a decision value are combined. The distortion removing part 23 can perform, in the first to sixth embodiments, distortion removing processing that is explained in each of the embodiments in turn. For example, processing such as out-of-band interference suppression, DC offset removal, IQ gain correction, IQ cross error correction, frequency offset correction, co-channel interference removal can be performed in turn and furthermore, repetition of those processing can be performed.

Seventh Embodiment.

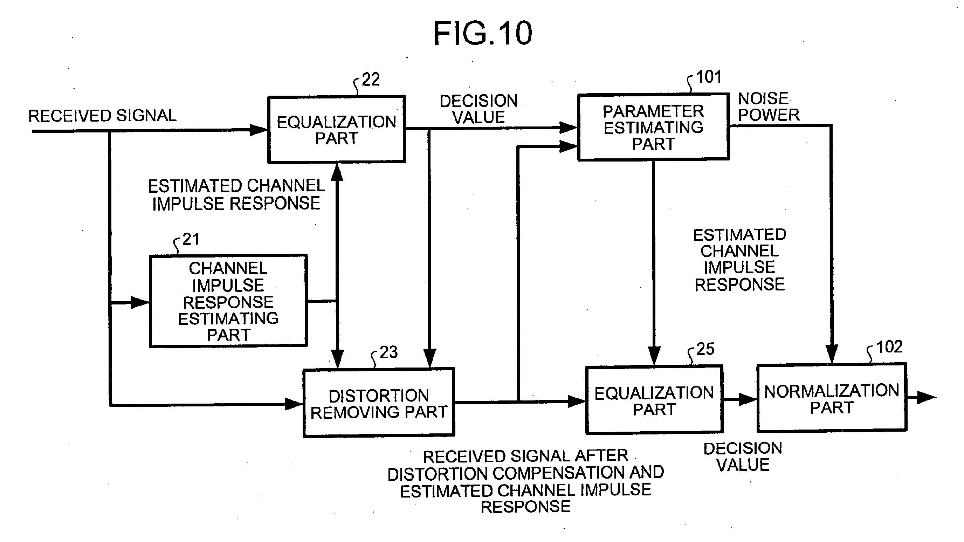

An explanation is given below about operations in a seventh embodiment. Fig. 10 is a configuration example of the demodulation processor 4 according to the seventh embodiment and, in addition to a configuration in Fig. 2 (or Fig. 4), depicts a configuration that estimates noise power in a parameter estimating part 101 and normalizes a decision value based on an estimating value of the noise power in a normalization part 112. A receiving device according to the seventh embodiment has almost the same configuration as that in the first embodiment (see Figs. 1). The demodulation processor 4 according to the embodiment includes the distortion removing part 23 described in any one of the first to sixth embodiments. In the embodiment, an explanation of the same processing as in the first to sixth embodiments is omitted and operations of only the parameter estimating part 101 and the normalization part 102 that are different in configuration from those in the first to sixth embodiments are explained.

As shown in Fig. 10, the parameter estimating part 101 re-calculates an error signal e"(n) and a channel impulse response estimating value h'(n) based on a decision value that is output by the equalization part 22, received signals r' (n) after removal of distortion that are output by the distortion removing part 23, and a channel impulse response estimating value h"(i) by using the following Equations (24) and (25):

$$e"(n)=r'(n)-\Sigma h'(i)\cdot I(n-i) \qquad (24)$$

$$h"(i)=h'(i)+1/(N-L)\cdot\Sigma e"(n)\cdot CONJG(I(n-i)) \qquad (25)$$

In Equation (24), $\Sigma$ is calculated for i=0 to L, and in Equation (25), $\Sigma$ is calculated for n=L+1 to N.

An estimating value q of noise power is calculated with the following Equation (26):

$$q=1/(N-L)\cdot\Sigma|e"(n)|^2 \qquad (26)$$

In Equation (26), $\Sigma$ is calculated for n=L+1 to N.

In Fig. 10, after dividing the decision value that is output by the equalization part 25 by an estimating value q of noise power calculated in the parameter estimating part 101, the normalization part 102 outputs the resulting value as a decision value after normalization.

Thus, in the embodiment, a provisional decision of received signals is first performed, a distortion component such as a DC offset is then accurately estimated based on the decision value and the received signals that correspond to data, and finally the estimated distortion component is accurately removed. The decision value is normalized based on the estimated value of noise power. This makes it possible to perform much higher quality communication than in each of the embodiments.

INDUSTRIAL APPLICABILITY

As described above, a receiving device according to the present invention is useful as a communication device of a radio communication system on a receiving side and is particularly suitable as a communication device that performs processing of removing distortion that is a degradation factor in communication quality.

**Claims**

**1.** A receiving device (a communication device on a receiving side) that is used in a radio communication system, the receiving device comprising:

a channel impulse response estimating unit that estimates a channel impulse response based on received signals;
a first equalization unit that performs predetermined decision processing based on the received signals and a channel impulse response estimating value that is output by the channel impulse response estimating unit;
a distortion removing unit that performs distortion compensation processing and processing for re-estimation of the channel impulse response based on the received signals, a decision value that is output by the first equalization unit, and the channel impulse response estimating value that is output by the channel impulse response estimating unit;
a parameter estimating unit that re-re-estimates the channel impulse response based on the decision value that is output by the first equalization unit, received signals after distortion compensation that are output by the distortion removing unit, and a re-estimated value of the channel impulse response; and
a second equalization unit that performs the predetermined decision processing again based on the received signals after distortion compensation that are output by the distortion removing unit and a re-re-estimated value of the channel impulse response that is output by the parameter estimating unit.

**2.** A receiving device (a communication device on a receiving side) that is used in a radio communication system, the receiving device comprising:

a channel impulse response estimating unit that estimates a channel impulse response based on received signals;
a first equalization unit that performs predetermined decision processing based on the received signals and a channel impulse response estimating value that is output by the channel impulse response estimating unit;
a distortion removing unit that performs distortion compensation processing and processing for re-estimation of the channel impulse response based on the received signals, a decision value that is output by the first equalization unit, the channel impulse response estimating value that is output by the channel impulse response estimating unit; and
a second equalization unit that performs the predetermined decision processing again based on received signals after distortion compensation that are output by the distortion removing unit and a re-estimated value of the channel impulse response.

**3.** The receiving device according to claim 1, further comprising:

a noise power estimating unit that estimates a noise power based on the decision value that is output by the first equalization unit, the received signals after distortion compensation that are output by the distortion removing unit, and the re-estimated value of the channel impulse response; and
a normalization unit that normalizes a decision value that is output by the second equalization unit based on a noise power estimation value that is output by the noise power estimating unit.

**4.** The receiving device according to claim 1, wherein the distortion removing unit estimates a DC offset component based on the received signals, the decision value that is output by the first equalization unit, and the re-estimated value of the channel impulse response, and removes estimated DC offset component from the received signals.

**5.** The receiving device according to claim 2, wherein the distortion removing unit estimates a DC offset component based on the received signals, the decision value that is output by the first equalization unit, and the re-estimated value of the channel impulse response, and removes estimated DC offset component from the received signals.

**6.** The receiving device according to claim 3, wherein the distortion removing unit estimates a DC offset component based on the received signals, the decision value that is output by the first equalization unit, and the re-estimated value of the channel impulse response, and removes estimated DC offset component from the received signals.

**7.** The receiving device according to claim 1, wherein the distortion removing unit estimates a compensation amount of IQ gain based on the received signals, the decision value that is output by the first equalization unit, and the re-estimated value of the channel impulse response, and corrects the received signals based on the estimated compensation amount.

**8.** The receiving device according to claim 2, wherein the distortion removing unit estimates a compensation amount of IQ gain based on the received signals, the decision value that is output by the first equalization unit, and the re-estimated value of the channel impulse response, and corrects the received signals based on the estimated compensation amount.

**9.** The receiving device according to claim 3, wherein the distortion removing unit estimates a compensation amount of IQ gain based on the received signals, the decision value that is output by the first equalization unit, and the re-estimated value of the channel impulse response, and corrects the received signals based on the estimated compensation amount.

**10.** The receiving device according to claim 1, wherein the distortion removing unit estimates a compensation amount of IQ cross-distortion based on the received signals, the decision value that is output by the first equalization unit, and the re-estimated value of the channel impulse response, and corrects the received signals based on the estimated compensation amount.

**11.** The receiving device according to claim 2, wherein the distortion removing unit estimates a compensation amount of IQ cross-distortion based on the received signals, the decision value that is output by the first equalization unit, and the re-estimated value of the channel impulse response, and corrects the received signals based on the estimated compensation amount.

12. The receiving device according to claim 3, wherein the distortion removing unit estimates a compensation amount of IQ cross-distortion based on the received signals, the decision value that is output by the first equalization unit, and the re-estimated value of the channel impulse response, and corrects the received signals based on the estimated compensation amount.

13. The receiving device according to claim 1, wherein the distortion removing unit estimates a compensation amount of frequency offset based on the received signals, the decision value that is output by the first equalization unit, and the re-estimated value of the channel impulse response, and corrects the received signals based on the estimated compensation amount.

14. The receiving device according to claim 2, wherein the distortion removing unit estimates a compensation amount of frequency offset based on the received signals, the decision value that is output by the first equalization unit, and the re-estimated value of the channel impulse response, and corrects the received signals based on the estimated compensation amount.

15. The receiving device according to claim 3, wherein the distortion removing unit estimates a compensation amount of frequency offset based on the received signals, the decision value that is output by the first equalization unit, and the re-estimated value of the channel impulse response, and corrects the received signals based on the estimated compensation amount.

16. The receiving device according to claim 1, wherein the distortion removing unit suppresses out-of-band interference based on the received signals, the decision value that is output by the first equalization unit, and the re-estimated value of the channel impulse response.

17. The receiving device according to claim 2, wherein the distortion removing unit suppresses out-of-band interference based on the received signals, the decision value that is output by the first equalization unit, and the re-estimated value of the channel impulse response.

18. The receiving device according to claim 3, wherein the distortion removing unit suppresses out-of-band interference based on the received signals, the decision value that is output by the first equalization unit, and the re-estimated value of the channel impulse response.

19. The receiving device according to claim 1, wherein the distortion removing unit removes co-channel interference based on the received signals, the decision value that is output by the first equalization unit, and the re-estimated value of the channel impulse response.

20. The receiving device according to claim 2, wherein the distortion removing unit removes co-channel interference based on the received signals, the decision value that is output by the first equalization unit, and the re-estimated value of the channel impulse response.

21. The receiving device according to claim 3, wherein the distortion removing unit removes co-channel interference based on the received signals, the decision value that is output by the first equalization unit, and the re-estimated value of the channel impulse response.

# FIG.1

```
  1
  ▽
  │         2              3              4                5
  │    ┌──────────┐   ┌──────┐   ┌──────────────┐   ┌──────────────┐
  └───▶│  ANALOG  │──▶│ A/D  │──▶│ DEMODULATION │──▶│    ERROR     │──▶
       │ PROCESSOR│   │      │   │  PROCESSOR   │   │  CORRECTION  │
       └──────────┘   └──────┘   └──────────────┘   │     PART     │
                                                    └──────────────┘
```

# FIG.2

RECEIVED SIGNAL ────────────────►┌─────────────┐  DECISION VALUE  ┌─────────────┐
                                 │     ⌒22     │ ───────────────► │     ⌒24     │
                                 │ EQUALIZATION│                  │  PARAMETER  │
                                 │    PART     │                  │ ESTIMATING  │
                                 └─────────────┘                  │    PART     │
                                                                  └─────────────┘

ESTIMATED CHANNEL
IMPULSE RESPONSE

┌─────────────┐
│     ⌒21     │
│   CHANNEL   │
│   IMPULSE   │
│  RESPONSE   │
│ ESTIMATING  │
│    PART     │
└─────────────┘

ESTIMATED
CHANNEL IMPULSE
RESPONSE

┌─────────────┐                  ┌─────────────┐
│     ⌒23     │                  │     ⌒25     │
│ DISTORTION  │ ───────────────► │ EQUALIZATION│ ────►
│REMOVING PART│                  │    PART     │
└─────────────┘                  └─────────────┘
                                              DECISION VALUE

RECEIVED SIGNAL
AFTER DISTORTION
COMPENSATION AND
ESTIMATED CHANNEL
IMPULSE RESPONSE

EP 1 850 502 A1

# FIG.3

ESTIMATED CHANNEL
IMPULSE RESPONSE

ESTIMATED CHANNEL
IMPULSE RESPONSE

DECISION
VALUE

31
CHANNEL IMPULSE
RESPONSE
RE-ESTIMATING
PART

RECEIVED
SIGNAL

32
DC OFFSET
REMOVING PART

RECEIVED
SIGNAL AFTER
DISTORTION
COMPENSATION

# FIG.4

# FIG.5

ESTIMATED CHANNEL
IMPULSE RESPONSE

DECISION
VALUE

RECEIVED
SIGNAL

31
CHANNEL
IMPULSE
RESPONSE
RE-ESTIMATING
PART

ESTIMATED
CHANNEL
IMPULSE
RESPONSE

41
IQ GAIN
CORRECTING
PART

RECEIVED SIGNAL
AFTER DISTORTION
COMPENSATION

# FIG.6

ESTIMATED CHANNEL
IMPULSE RESPONSE

DECISION
VALUE

RECEIVED
SIGNAL

31
CHANNEL
IMPULSE
RESPONSE
RE-ESTIMATING
PART

ESTIMATED
CHANNEL
IMPULSE
RESPONSE

51
IQ CROSS
DISTORTION
CORRECTING
PART

RECEIVED SIGNAL
AFTER DISTORTION
COMPENSATION

# FIG.7

ESTIMATED CHANNEL
IMPULSE·RESPONSE

DECISION
VALUE

RECEIVED SIGNAL

CHANNEL
IMPULSE
RESPONSE RE-
ESTIMATING PART
⌐31

ESTIMATED
CHANNEL IMPULSE
RESPONSE

FREQUENCY
OFFSET
CORRECTING
PART
⌐61

RECEIVED
SIGNAL
AFTER
DISTORTION
COMPENSATION

# FIG.8

ESTIMATED CHANNEL
IMPULSE RESPONSE

DECISION VALUE

RECEIVED SIGNAL

CHANNEL
IMPULSE
RESPONSE
RE-ESTIMATING
PART
⌐31

ESTIMATED
CHANNEL IMPULSE
RESPONSE

OUT-OF-BAND
INTERFERENCE
SUPPRESSING
PART
⌐71

RECEIVED SIGNAL
AFTER DISTORTION
COMPENSATION

ESTIMATED
CHANNEL IMPULSE
RESPONSE

# FIG.9

ESTIMATED CHANNEL
IMPULSE RESPONSE

DECISION
VALUE

RECEIVED
SIGNAL

$\subset$31

CHANNEL IMPULSE
RESPONSE
RE-ESTIMATING
PART

ESTIMATED
CHANNEL IMPULSE
RESPONSE

$\subset$81

CO-CHANNEL
INTERFERENCE
REMOVING PART

RECEIVED
SIGNAL AFTER
DISTORTION
COMPENSATION

# FIG.10

RECEIVED SIGNAL

EQUALIZATION PART ⌐22

DECISION VALUE

PARAMETER ESTIMATING PART ⌐101

NOISE POWER

ESTIMATED CHANNEL IMPULSE RESPONSE

CHANNEL IMPULSE RESPONSE ESTIMATING PART ⌐21

ESTIMATED CHANNEL IMPULSE RESPONSE

DISTORTION REMOVING PART ⌐23

EQUALIZATION PART ⌐25

NORMALIZATION PART ⌐102

RECEIVED SIGNAL AFTER DISTORTION COMPENSATION AND ESTIMATED CHANNEL IMPULSE RESPONSE

DECISION VALUE

<div align="center">

**INTERNATIONAL SEARCH REPORT**

</div>

| | International application No. |
|---|---|
| | PCT/JP2005/002873 |

| A. CLASSIFICATION OF SUBJECT MATTER |
|---|
| Int.Cl$^7$ H04B7/005, H04L27/38 |
| |
| According to International Patent Classification (IPC) or to both national classification and IPC |

| B. FIELDS SEARCHED |
|---|
| Minimum documentation searched (classification system followed by classification symbols) |
| Int.Cl$^7$ H04B1/00, H04B3/00, H04B7/00, H04L27/00 |
| |
| Documentation searched other than minimum documentation to the extent that such documents are included in the fields searched |
| Jitsuyo Shinan Koho 1922-1996 Jitsuyo Shinan Toroku Koho 1996-2005 |
| Kokai Jitsuyo Shinan Koho 1971-2005 Toroku Jitsuyo Shinan Koho 1994-2005 |
| |
| Electronic data base consulted during the international search (name of data base and, where practicable, search terms used) |
| |

| C. DOCUMENTS CONSIDERED TO BE RELEVANT | | |
|---|---|---|
| Category* | Citation of document, with indication, where appropriate, of the relevant passages | Relevant to claim No. |
| A | JP 2003-134010 A (Communications Research Laboratory), 09 May, 2003 (09.05.03), Particularly, Fig. 2; Par. No. [0035] (Family: none) | 1-21 |
| A | JP 2003-530769 A (Nokia Corp.), 14 October, 2003 (14.10.03), Particularly, Fig. 4 & WO 01/78338 A1 & AU 200152305 A & BR 200105576 A & EP 1183840 A1 & US 2002-057735 A1 & CN 1366753 A | 1-21 |
| A | JP 07-066843 A (NEC Corp.), 10 March, 1995 (10.03.95), Particularly, Fig. 1 (Family: none) | 1-21 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 May, 2005 (23.05.05) | 07 June, 2005 (07.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2005/002873 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-269865 A  (Pioneer Electronic Corp.),<br>29 September, 2000 (29.09.00),<br>Particularly, Fig. 4<br>& CA 2300726 A1         & KR 2000062890 A<br>& US 6829298 B1 | 1-21 |
| A | JP 03-278719 A  (Matsushita Electric Industrial Co., Ltd.),<br>10 December, 1991 (10.12.91),<br>Particularly, Fig. 3<br>(Family: none) | 1-21 |
| A | Takayuki NAGAI, Hirotsugu KUBO, Keiji MURAKAMI, Tadashi FUJINO, Norihiko MORINAGA, "Nanhantei to Ayamari Teisei o Kurikaeshi Okonau Jushin Hoshiki", The Transactions of the Institute of Electronics, Information and Communication Engineers B-II, Vol.J81-B-II, No.8, (25 August, 1998 (25.08.98)), pages 742 to 750 | 1-21 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6370205 B

- WO 02009315 A

**Non-patent literature cited in the description**

- **H. KUDO ; K. MURAKAMI ; T. FUJINO.** An Adaptive Maximum-Likelihood Sequence Estimator for Fast Time-Varying Intersymbol Interference channels. *IEEE Trans. commun.,* 1994, vol. 42 (2/3/4), 1872-1880